# EUROPEAN PATENT SPECIFICATION

(11) **EP 4 000 367 B1**
(45) Date of publication and mention of the grant of the patent: **15.10.2025**
(21) Application number: 21207740.8
(22) Date of filing: 11.11.2021
(51) Int. Cl.: A01D 34/00

(54) **AN ENERGY EFFICIENT ROBOTIC LAWN MOWER**
ENERGIEEFFIZIENTER ROBOTISCHER RASENMÄHER
TONDEUSE ROBOT À FAIBLE CONSOMMATION D'ÉNERGIE

(30) Priority: 17.11.2020 SE 2051339
(43) Date of publication of application: 25.05.2022
(73) Proprietor: Husqvarna AB, 56182 Huskvarna (SE)
(72) Inventor: LANDIN, Rickard, 55459 Jönköping (SE)

(56) References cited:
- EP-B1- 2 690 582
- EP-B1- 3 298 874
- US-A1- 2008 219 508
- US-A1- 2017 344 020
- US-A1- 2019 208 700
- US-A1- 2020 068 799

## Description

### TECHNICAL FIELD

The present disclosure relates to an energy efficient robotic lawn mower.

### BACKGROUND

Robotic lawn mowers are becoming increasingly more popular. In a typical deployment a work area, such as a garden, the work area is enclosed by a boundary wire with the purpose of keeping the robotic lawn mower inside the work area. An electric control signal may be transmitted through the boundary wire thereby generating an (electro-) magnetic field emanating from the boundary wire. The robotic working tool is typically arranged with one or more sensors adapted to sense the control signal.

Alternatively, or as a supplement, the robotic lawn mower can be equipped for satellite navigation by means of GPS (Global Positioning System) or some other Global Navigation Satellite System (GNSS) system.

The robotic lawn mower is adapted to cut grass on a user's lawn automatically and can be charged automatically without intervention of the user, and does not need to be manually managed after being set once. The robotic lawn mower is suitably adapted to recognize an obstacle to avoid colliding with the obstacle before encountering the obstacle. The robotic lawn mower therefore comprises one or more environment detection sensors of one or more types such as for example camera devices as well as radar, Lidar and ultrasonic sensors.

The document EP 3 298 874 B1 discloses a robotic gardening device that comprises a controlling unit, which is for example a data processing unit like a controller that supplies driving means and a working tool with respective drive signals, and a computing unit that receives a signal supplied from an environment sensor. The environment sensor is preferably a camera, and the signal then corresponds to a camera image that is evaluated in the computing unit, and objects in the image are classified.

There is, however, a need to enable the robotic lawn mower to handle different types of obstacles in a suitable corresponding way in an efficient manner, especially since varying lightning and weather conditions makes it hard with traditional geometric based detection. Since the robotic lawn mower's service is interrupted by charging when the onboard energy source, normally a battery arrangement, is about to be depleted, it is also desired to provide a more energy efficient robotic lawn mower that can run for a longer time between charging occasions. There is also a need to enable the robotic lawn mower to be able to move in different terrains such as slopes without being hindered and halted.

### SUMMARY

The object of the present disclosure is to provide an improved robotic lawn mower that can run for a longer time between charging occasions, and being able to move in different terrain conditions. It is also desired that the robotic lawn mower is adapted to discriminate between different objects in its path and to handle them according to their type.

This object is achieved by means of robotic lawn mower control unit adapted for use in a robotic lawn mower and comprising a main a processing unit adapted to cause the control unit to control the operation of the robotic lawn mower. This includes, but is not limited to, controlling at least one environment detection device and the propulsion of the robotic lawn mower. The control unit further comprises a separate auxiliary processing unit that is dedicated to perform recognition and classification of objects by means of data acquired by means of at least one environment detection device.

In this way, an increased capability for recognition and classification of objects is enabled while the increase of power consumption is kept at a minimum.

According to some aspects, the auxiliary processing unit comprises a neural network that can be trained in advance, enabling the recognition, classification and decision process to be performed by means of artificial intelligence (Al).

In this way, a vastly increased capability for recognition and classification of objects is enabled.

According to some aspects, the neural network is adapted to be continuously trained when the robotic lawn mower is operational.

In this way, the capability for recognition and classification of objects can be increased during the life of the robotic lawn mower.

According to some aspects, the auxiliary processing unit is an artificial intelligence (AI) accelerator.

In this way, a known type of auxiliary processing unit can be used which vastly reduces the power consumption compared to if all processing would be performed by the main processing unit.

According to some aspects, the auxiliary processing unit is adapted to receive data directly from at least one environment detection device.

According to some aspects, at least one environment detection device is in the form of:
- a radar transceiver device;
- a Lidar device;
- an ultrasonic sensor device; or
- a camera device.

The present disclosure is thus applicable for many different kinds of environment detection devices

According to some aspects, the main processing unit is adapted to receive data regarding recognition and classification of objects from the auxiliary processing unit, and to take decisions regarding control of speed and direction of the robotic lawn mower in dependence of the recognized and classified object or objects.

In this way, the main processing unit is provided with data necessary to take the decisions regarding control of speed and direction of the robotic lawn mower.

According to some aspects, the auxiliary processing unit is adapted to take decisions regarding control of speed and direction of the robotic lawn mower in dependence of the recognized and classified object or objects, and to provide these decisions to the main processing unit.

In this way, the main processing unit is provided with the decisions regarding control of speed and direction of the robotic lawn mower, and can take necessary action directly.

According to some aspects, the auxiliary processing unit is adapted to perform at least a main part of the classification of objects

According to some aspects, a part of the classification of objects is performed by the main processing unit.

The classification of objects can thus be shared between the auxiliary processing unit and the main processing unit.

The present disclosure also relates to robotic lawn mowers and methods that are associated with above advantages.

### BRIEF DESCRIPTION OF THE DRAWINGS

The present disclosure will now be described more in detail with reference to the appended drawings, where:
- Figure 1A: shows a perspective side view of a robotic lawn mower;
- Figure 1B: shows a schematic overview of the robotic lawn mower;
- Figure 2: shows a schematic view of a control unit;
- Figure 3: shows a computer program product; and
- Figure 4: shows a flowchart for methods according to the present disclosure.

### DETAILED DESCRIPTION

Aspects of the present disclosure will now be described more fully hereinafter with reference to the accompanying drawings. The different devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

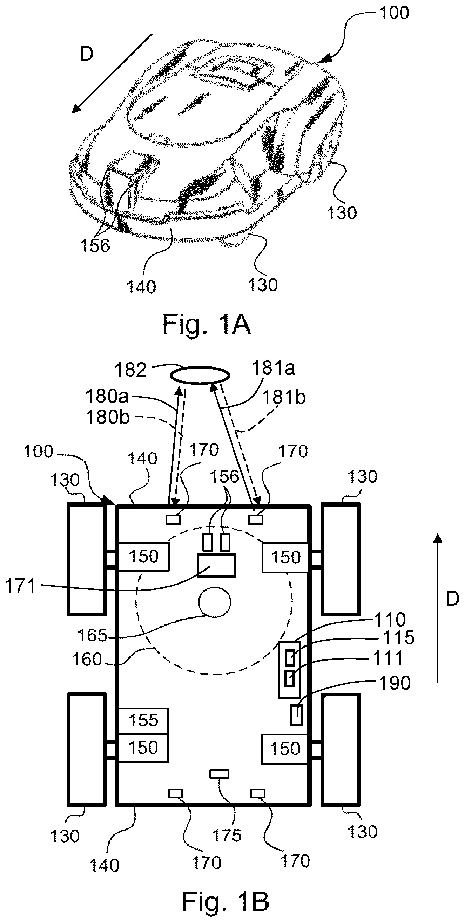

Figure 1A shows a perspective view of a robotic lawn mower 100 and Figure 1B shows a schematic overview of the robotic lawn mower 100. The robotic lawn mower 100 is adapted for a forward travelling direction D, has a body 140 and a plurality of wheels 130; in this example the robotic lawnmower 100 has four wheels 130, two front wheels and two rear wheels. The robotic lawn mower 100 comprises a control unit 110 and at least one electric motor 150, where at least some of the wheels 130 are drivably connected to at least one electric motor 150. It should be noted that even if the description herein is focused on electric motors, combustion engines may alternatively be used in combination with an electric motor arrangement. The robotic lawn mower 100 may be a multi-chassis type or a mono-chassis type. A multi-chassis type comprises more than one body parts that are movable with respect to one another. A mono-chassis type comprises only one main body part. The control unit 110 comprises a main processing unit 115.

In this example embodiment, the robotic lawnmower 100 is of a mono-chassis type, having a main body part 140. The main body part 140 substantially houses all components of the robotic lawnmower 100.

The robotic lawnmower 100 also comprises a grass cutting device 160, such as a rotating blade 160 driven by a cutter motor 165. The robotic lawnmower 100 also has at least one rechargeable electric power source such as a battery 155 for providing power to the electric motor arrangement 150 and/or the cutter motor 165. The battery 155 is arranged to be charged by means of received charging current from a charging station (not shown), received through charging skids 156 or other suitable charging connectors. Inductive charging without galvanic contact, only by means of electric contact, is also conceivable. The battery is generally constituted by a rechargeable electric power source 155 that comprises one or more batteries that can be separately arranged or be arranged in an integrated manner to form a combined battery.

According to some aspects, the robotic lawnmower 100 may further comprise at least one navigation sensor arrangement 175. In one embodiment, the navigation sensor arrangement 175 comprises one or more sensors for deduced navigation. Examples of sensors for deduced reckoning are odometers, accelerometers, gyroscopes, and compasses to mention a few examples. In one embodiment, the navigation sensor arrangement 175 comprises a beacon navigation sensor and/or a satellite navigation sensor 190. The beacon navigation sensor may be a Radio Frequency receiver, such as an Ultra Wide Band (UWB) receiver or sensor, configured to receive signals from a Radio Frequency beacon, such as a UWB beacon. Alternatively or additionally, the beacon navigation sensor may be an optical receiver configured to receive signals from an optical beacon. The satellite navigation sensor may be a GPS (Global Positioning System) device or other Global Navigation Satellite System (GNSS) device.

According to some aspects, the robotic lawn mower 100 further comprises at least one environment detection device 170, 171. In this example, radar transceivers 170 are provided and adapted to transmit signals 180a, 180b and to receive reflected signals 180b, 181b that have been reflected by an object 182. To enable this, according to some aspects, each detector transceiver 170 comprises a corresponding transmitter arrangement and receiver arrangement together with other necessary circuitry in a well-known manner. In this example, the robotic lawn mower 100 further comprises a camera device 171 that is adapted to provide images of the environment in front of the robotic lawn mower 100, for example images of the object 182.

For this purpose, the control unit 110 is adapted to control the camera device 171 and the radar transceivers 170 and to control the speed and direction of the robotic lawn mower 100 in dependence of information acquired by means of the of the radar transceivers 170 when the robotic lawn mower 100 is moving. In particular, the control unit 110 is adapted to recognize, and discriminate between, different types of objects such as for example animals, humans, objects that are more or less stationary such as rocks, bushes and fixed constructions such as brick walls, and objects of more or less intermittent character such as garden furniture, garden toys and flower pots. In this manner, the objects can be classified accordingly.

According to some aspects, the control unit 110 is also adapted to recognize one or more robotic lawn mower charging stations and to be able to ensure that an electrical connections is accomplished between the charging station and the charging skids 156 when determined necessary.

According to some aspects, the control unit 110 is also adapted to recognize, and discriminate between, different types of ground types such as for example grass, asphalt and a gravel walk, and even between different lengths of grass to be cut.

The control unit 110 is adapted to control the speed and direction of the robotic lawn mower 100 in dependence of information deduced from the acquired camera images and sensor detections, for example slowing down and being prepared to stop and change direction when approaching an animal, to avoid approaching areas occupies by humans and to move all the way to objects, cutting the grass all the way to the object. Fixed objects can be pre-programmed and intermittent objects have to be determined from time to time.

According to the present disclosure, in order to achieve this in an energy-efficient manner, the control unit 110 comprises a separate auxiliary processing unit 111 that is dedicated to perform recognition and classification of objects by means of data acquired by means of at least one environment detection device 170, 171. The data is provided directly by one or more environment detection device 170, 171, or is first processed by the main processing unit 115. For example, camera images are fed directly to the auxiliary processing unit 111 while radar detections data first are processed by the main processing unit 115 and the processing result is fed to the auxiliary processing unit 111. Other alternatives for data flows from the at least one environment detection device 170, 171 to the auxiliary processing unit 111 are of course conceivable.

According to some aspects, the result is used by the control unit 110 that is adapted to make decisions regarding control of speed and direction of the robotic lawn mower 100 in dependence of the recognized and classified object or objects. These decisions are either made by the auxiliary processing unit 111 or the main processing unit 115 as will be discussed more below.

According to some aspects, the classification of objects 182 comprises determining if an object is an animal, a human or a non-living object such as leaves, bushes, furniture, clothes etc., and the control unit 110 is adapted to determine a certain behavior depending on the recognized class.

The recognition, classification and decision process according to the above is according to some aspects performed by means of artificial intelligence, AI, where the control unit 110 comprises a neural network that can be trained in advance, before delivery to a customer, for example in a factory environment or in a digital environment, for example a so-called digital twin or similar. According to some aspects, the neural network is adapted to be continuously trained when the robotic lawn mower 100 is operational, i.e. running or resting, for example when charging. In the latter case, the neural network is enabled to adapt to the specific setting at the grounds where the robotic lawn mower 100 is installed, as well as to changing conditions at the setting, for example moved garden furniture and garden toys.

In particular, the recognition process is adapted to recognize different objects and to discriminate between them under different conditions such as bright light, darkness, precipitation, frost etc., and this is enabled by means of the Al functionality of the neural network.

According to some aspects, the auxiliary processing unit 111 comprises a neural network according to the above, and by letting the recognition and classification processes according to the above be dedicated to the auxiliary processing unit 111, the energy consumption is kept at a low magnitude while enabling the recognition and classification processes according to the above to be performed.

According to some aspects, the auxiliary processing unit 111 is constituted by a so-called Al accelerator.

The control unit 110 can be constituted by several separate control sub-units or one single integrated control unit where the auxiliary processing unit 111 is a dedicated part that both can be a separate unit or an integrated unit, and will be described more in detail later. The main processing unit 115 is adapted to perform all necessary signal processing necessary for controlling the radar transceivers 170 and to acquire the desired information from the detected measurement results.

According to some further aspects, as an addition to the above, the control unit 110 is adapted to use data from the navigation sensor arrangement 175 to perform recognition and classification, for example regarding fixed and previously known structures such as walls and charging stations. It can then, for example, be determined if radar detections originate from reflections that correspond to such known structures.

According to some aspects, the auxiliary processing unit 111 comprises a separate data storage medium as will be discussed below.

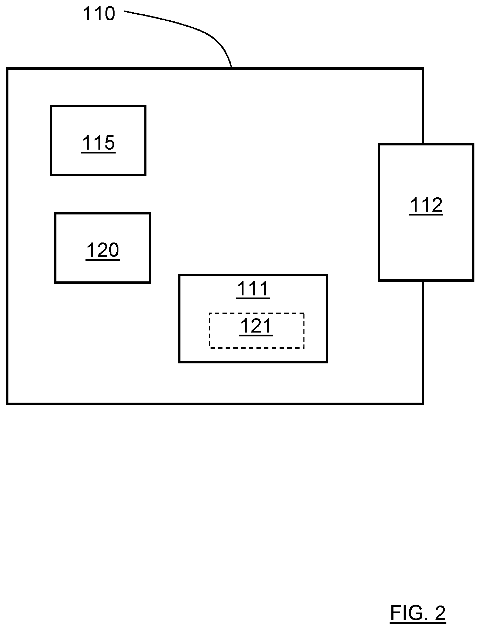

In Figure 2 it is schematically illustrated, in terms of a number of functional units, the components of the control unit 110 according to embodiments of the discussions herein. The main processing unit 115 is provided using any combination of one or more of a suitable central processing unit CPU, multiprocessor, microcontroller, digital signal processor DSP, etc., capable of executing software instructions stored in a computer program product, e.g. in the form of a main storage medium 120. The main processing unit 115 may further be provided as at least one application specific integrated circuit ASIC, or field programmable gate array FPGA. The main processing unit thus comprises a plurality of digital logic components.

Particularly, the main processing unit 115 is configured to cause the control unit 110 to perform a set of operations, or steps to control the operation of the robotic lawn mower 100 including, but not being limited to, controlling the camera device 171 and sensors such as for example the radar transceivers 170, processing measurements results received via the radar transceivers 170, and the propulsion of the robotic lawn mower 100. According to some aspects, the set of operations, or steps to control the operation of the robotic lawn mower 100, include making decisions regarding control of speed and direction of the robotic lawn mower 100 in dependence of the recognized and classified object or objects. According to some aspects, the set of operations, or steps to control the operation of the robotic lawn mower 100, include at least partial classification of the recognized objects as will be discussed more below.

For example, the main storage medium 120 may store the set of operations, and the main processing unit 115 may be configured to retrieve the set of operations from the main storage medium 120 to cause the control unit 110 to perform the set of operations. The set of operations may be provided as a set of executable instructions. Thus, the main processing unit 115 is thereby arranged to execute methods as herein disclosed.

The main storage medium 120 may also comprise persistent storage, which, for example, can be any single one or combination of magnetic memory, optical memory, solid state memory or even remotely mounted memory.

According to some aspects, the control unit 110 further comprises an interface 112 for communications with at least one external device such as environment detection devices, a control panel and/or external device. As such, the interface 112 may comprise one or more transmitters and receivers, comprising analogue and digital components and a suitable number of ports for wireline communication. The interface 112 can be adapted for communication with other devices, such as a server, a personal computer or smartphone, the charging station, and/or other robotic working tools. Examples of such wireless communication devices are Bluetooth^{®}, WiFi^{®} (IEEE802.11b), Global System Mobile (GSM) and LTE (Long Term Evolution), to name a few.

The control unit 110 further comprises the auxiliary processing unit 111 as described above, where the auxiliary processing unit 111 uses any combination of one or more of a suitable central processing unit CPU, multiprocessor, microcontroller, digital signal processor DSP, etc., capable of executing software instructions stored in a computer program product, e.g. in the form of the main storage medium 120. According to some aspects, the auxiliary processing unit 111 receives all software instructions from the storage medium 120, either directly or via the main processing unit 115. The auxiliary processing unit 111 may further be provided as at least one application specific integrated circuit ASIC, or field programmable gate array FPGA.

Particularly, as mentioned above, the auxiliary processing unit 111 is configured to perform a set of operations including, but not being limited to, handling recognition and, at least a main part of the classification of objects, where a part of the classification of objects can be performed by the main processing unit 115. In any case, the auxiliary processing unit 111 is dedicated to perform both recognition and classification of objects even if a minor part of the classification process is performed by the main processing unit 115.

Generally, the main processing unit 115 does not have to handle the recognition and possibly only a minor part of the classification of objects.

According to some aspects, the main processing unit 115 is adapted to handle decisions regarding control of speed and direction of the robotic lawn mower 100, and to control the propulsion of the robotic lawn mower 100 in dependence of the decisions regarding control of speed and direction of the robotic lawn mower 100 made by the auxiliary processing unit 111. In this context, propulsion relates to both movement and direction of movement.

According to some aspects, the auxiliary processing unit 111 may comprise a separate storage medium 121, for example of the same type as the previously described main storage medium 120, and can in any case use the main storage medium 120, either alone or in addition to the separate storage medium 121. The separate storage medium 121 can either be of the type ROM (Read Only Memory), RAM (Random Access Memory) or a combination of both.

The auxiliary processing unit 111 may be configured to retrieve the set of operations from the main storage medium 120, and/or the separate storage medium 121 to cause the auxiliary processing unit 111 to perform the set of operations. The set of operation can according to some aspects be provided by the main processing unit 115.The set of operations may be provided as a set of executable instructions. Thus, the auxiliary processing unit 111 is thereby arranged to execute methods as herein disclosed.

Using a dedicated auxiliary processing unit 111 for the described tasks presents a large power reduction since a certain processing unit can be designed to perform certain calculations that traditionally are relatively heavy and power-consuming for a normal CPU or similar that is designed to perform many different tasks, as the main processing unit 115 discussed above.

By relieving the main processing unit 115 of the tasks related to recognition and at least a main part of the classification of objects, and letting the specially designed and dedicated auxiliary processing unit 111 perform these tasks, the power consumption is heavily reduced, for example by a factor between 10 and 100. By means of the reduced power consumption, the charge of the rechargeable electric power source 155 lasts longer and less coolant structures such as ventilation ducts, ventilation fans and coolant flanges are needed since the heat dissipation is lowered, which further reduces the weight of the robotic lawn mower 100.

In other words, traditionally, Al requires plenty of processing power and the Al models that can be used on a battery driven device such as the robotic lawn mower 100 needs to be scaled down lowering accuracy and number of classes that can be detected. Using the auxiliary processing unit 111 according to the above, suitably being in the form of an Al-accelerator, allows Al calculations to be performed much faster but still only using a fraction of the energy consumption compared to if all calculations had to be performed by the main processing unit 115 discussed above.

This also reduces the risk of additional weight, for example in the form of coolant flanges, being positioned at disadvantageous positioned that reduces maneuverability. This can be the case if the weight proportions causes the driving wheels to have less driving contact with the ground, and causes slopes and other terrain conditions to be more difficult to cross.

According to some aspects, the interface 112 can be adapted to transfer sensor data and/or camera images directly to the auxiliary processing unit 111. Then, for example camera images can be used directly in a recognition and classification procedure at the auxiliary processing unit 111.

Using the auxiliary processing unit 111 according to the above, suitably being in the form of an Al-accelerator, provides a number of advantages. For example:
- The possibility to perform more advanced and processing heavy Al calculations for object detection that otherwise would be impossible to do in real time on a robotic lawn mower are extended, since a traditional approach would use too much energy and create an intolerable amount of heat.
- Different behaviors of the robotic lawn mower depending on what kind of object that is detected are allowed since more classes of objects can be identified.
- Traditionally, a lot of trade-offs needs to be considered for object detections, where the robotic lawn mower according to the present disclosure will not be limited by these factors anymore. For example general speed limits of the since objects can be extended since objects can be detected and classified more quickly. Furthermore, slowing down or lowering the processed framerate from the camera for doing more complex calculations is not needed when an object/changed ground type is detected, since the control unit 110 only requires a relatively small amount of time to do necessary calculations to detect object type or material of the ground. Also, complete camera images can be used instead of cropped camera images since the auxiliary processing unit 111 enables real time data processing capability for the entire image.

According to some aspects, when the auxiliary processing unit 111 has performed recognition and at least a main part of the classification of one or more objects 182, the result can be communicated to a user device such as a smartphone via the interface 112 such that the user can instruct the control unit 110 about further actions. In this case, in the absence of user instructions, the control unit 110 controls the robotic lawn mower 100 to move away from the object in question.

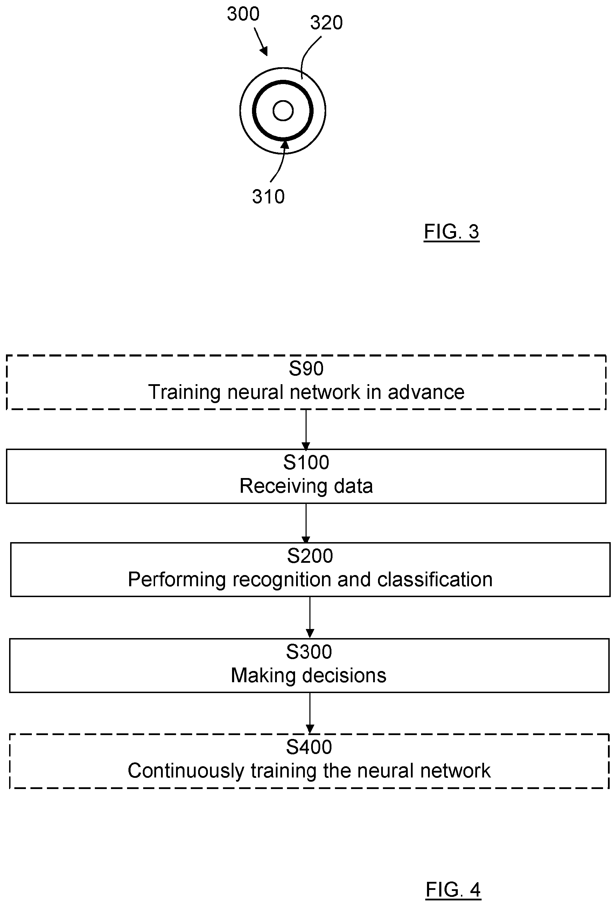

Figure 3 shows a computer program product 300 comprising computer executable instructions 310 stored on media 320 to execute any of the methods disclosed herein.

With reference to Figure 4, the present disclosure relates to a method in a robotic lawn mower 100 that comprises a control unit that comprises a control unit 110 with main processing unit 115 used for controlling the operation of the robotic lawn mower 100. This includes, but is not limited to, controlling at least one environment detection device 170, 171 and the propulsion of the robotic lawn mower. The method comprises receiving S100 data from the at least one environment detection device 170, 171. The method further comprises using a separate auxiliary processing unit 111 dedicated for performing S200 recognition and classification of objects 182, and making S300 decisions regarding control of speed and direction of the robotic lawn mower 100 in dependence of the recognized and classified object 182 or objects.

## Claims

1. A robotic lawn mower control unit (110) adapted for use in a robotic lawn mower (100) and comprising a main processing unit (115) adapted to cause the control unit (110) to control the operation of the robotic lawn mower (100) including, but not being limited to, controlling at least one environment detection device (170, 171) and the propulsion of the robotic lawn mower (100), **characterized in that** the control unit (110) further comprises a separate auxiliary processing unit (111) that is dedicated to perform recognition and classification of objects (182) by means of data acquired by means of at least one environment detection device (170, 171).

2. The control unit (110) according to claim 1, wherein the auxiliary processing unit (111) comprises a neural network that can be trained in advance, enabling the recognition, classification and decision process to be performed by means of artificial intelligence, AI.

3. The control unit (110) according to claim 2, wherein the neural network is adapted to be continuously trained when the robotic lawn mower (100) is operational.

4. The control unit (110) according to any one of the preceding claims, wherein the auxiliary processing unit (111) is an artificial intelligence, AI, accelerator.

5. The control unit (110) according to any one of the preceding claims, wherein the auxiliary processing unit (111) is adapted to receive data directly from at least one environment detection device (170, 171).

6. The control unit (110) according to any one of the preceding claims, wherein at least one environment detection device (170, 171) is in the form of:
- a radar transceiver device;
- a Lidar device;
- an ultrasonic sensor device; or
- a camera device.

7. The control unit (110) according to any one of the preceding claims, wherein the main processing unit (115) is adapted to receive data regarding recognition and classification of objects (182) from the auxiliary processing unit (111), and to take decisions regarding control of speed and direction of the robotic lawn mower (100) in dependence of the recognized and classified object (182) or objects.

8. The control unit (110) according to any one of the claims 1-6, wherein the auxiliary processing unit (111) is adapted to take decisions regarding control of speed and direction of the robotic lawn mower (100) in dependence of the recognized and classified object (182) or objects, and to provide these decisions to the main processing unit (115).

9. The control unit (110) according to any one of the preceding claims, wherein the auxiliary processing unit (111) is adapted to perform at least a main part of the classification of objects.

10. The control unit (110) according to claim 9, wherein a part of the classification of objects is performed by the main processing unit (115).

11. The control unit (110) according to any one of the preceding claims, wherein the classification of objects (182) comprises determining of an object is an animal, a human or a non-living object.

12. A robotic lawn mower (100) comprising a body (140) and a plurality of wheels (130) and at least one electric motor (150), where at least some of the wheels (130) are drivably connected to at least one electric motor (150), where the robotic lawn mower (100) further comprises a grass cutting device (160) adapted to be driven by a cutter motor (165) and at least one rechargeable electric power source (155) for providing power to the electric motor (150) and/or the cutter motor (165), wherein the robotic lawn mower (100) further comprises a control unit (110) according to any one of the claims 1-8.

13. A method in a robotic lawn mower (100), where the method comprises
controlling the operation of the robotic lawn mower (100) including, but not being limited to, controlling at least one environment detection device (170, 171) and the propulsion of the robotic lawn mower, using a main processing unit (115), and
receiving (S100) data from the at least one environment detection device (170, 171); **characterized in that** the method further comprises using a separate auxiliary processing unit (111) dedicated for:
performing (S200) recognition and classification of objects (182); and
making (S300) decisions regarding control of speed and direction of the robotic lawn mower (100) in dependence of the recognized and classified object (182) or objects.

14. The method according to claim 13, wherein the method comprises training (S90) a neural network, used by the auxiliary processing unit (111), in advance, enabling the recognition, classification and decision process to be performed by means of artificial intelligence, AI.

15. The method according to claim 14, wherein the method comprises continuously training (S400) the neural network when the robotic lawn mower (100) is operational.

16. The method according to any one of the claims 13-15, wherein the auxiliary processing unit (111) is an artificial intelligence, AI, accelerator.

## Patentansprüche

1. Steuereinheit (110) für einen robotischen Rasenmäher, die zur Verwendung in einem robotischen Rasenmäher (100) angepasst ist und eine Hauptverarbeitungseinheit (115) umfasst, die angepasst ist, um zu bewirken, dass die Steuereinheit (110) den Betrieb des robotischen Rasenmähers (100) steuert, einschließlich, aber nicht beschränkt auf, einem Steuern mindestens einer Umgebungserfassungsvorrichtung (170, 171) und des Antriebs des robotischen Rasenmähers (100), **dadurch gekennzeichnet, dass** die Steuereinheit (110) ferner eine separate Hilfsverarbeitungseinheit (111) umfasst, die dazu bestimmt ist, eine Erkennung und Klassifizierung von Objekten (182) mittels Daten durchzuführen, die mittels mindestens einer Umgebungserfassungsvorrichtung (170, 171) erfasst wurden.

2. Steuereinheit (110) nach Anspruch 1, wobei die Hilfsverarbeitungseinheit (111) ein neuronales Netz umfasst, das im Voraus trainiert werden kann, so dass der Erkennungs-, Klassifizierungs- und Entscheidungsprozess mittels künstlicher Intelligenz, KI, durchgeführt werden kann.

3. Steuereinheit (110) nach Anspruch 2, wobei das neuronale Netz so angepasst ist, dass es kontinuierlich trainiert wird, wenn der robotische Rasenmäher (100) in Betrieb ist.

4. Steuereinheit (110) nach einem der vorhergehenden Ansprüche, wobei die Hilfsverarbeitungseinheit (111) ein Beschleuniger mit künstlicher Intelligenz, KI, ist.

5. Steuereinheit (110) nach einem der vorhergehenden Ansprüche, wobei die Hilfsverarbeitungseinheit (111) angepasst ist, um Daten direkt von mindestens einer Umgebungserfassungsvorrichtung (170, 171) zu empfangen.

6. Steuereinheit (110) nach einem der vorhergehenden Ansprüche, wobei mindestens eine Umgebungserfassungsvorrichtung (170, 171) in der Form vorliegt von:
- einer Radar-Sende-/Empfangsvorrichtung;
- einer Lidar-Vorrichtung;
- einer Ultraschallsensorvorrichtung; oder
- einer Kameravorrichtung.

7. Steuereinheit (110) nach einem der vorhergehenden Ansprüche, wobei die Hauptverarbeitungseinheit (115) angepasst ist, um Daten bezüglich der Erkennung und Klassifizierung von Objekten (182) von der Hilfsverarbeitungseinheit (111) zu empfangen und Entscheidungen bezüglich der Steuerung der Geschwindigkeit und Richtung des robotischen Rasenmähers (100) in Abhängigkeit von dem erkannten und klassifizierten Objekt (182) oder Objekten zu treffen.

8. Steuereinheit (110) nach einem der Ansprüche 1 bis 6, wobei die Hilfsverarbeitungseinheit (111) dazu ausgebildet ist, Entscheidungen bezüglich der Steuerung der Geschwindigkeit und Richtung des robotischen Rasenmähers (100) in Abhängigkeit von dem erkannten und klassifizierten Objekt (182) oder Objekten zu treffen und diese Entscheidungen an die Hauptverarbeitungseinheit (115) zu liefern.

9. Steuereinheit (110) nach einem der vorhergehenden Ansprüche, wobei die Hilfsverarbeitungseinheit (111) angepasst ist, um zumindest einen Hauptteil der Klassifizierung der Objekte durchzuführen.

10. Steuereinheit (110) nach Anspruch 9, wobei ein Teil der Klassifizierung von Objekten von der Hauptverarbeitungseinheit (115) durchgeführt wird.

11. Steuereinheit (110) nach einem der vorhergehenden Ansprüche, wobei die Klassifizierung von Objekten (182) das Bestimmen umfasst, ob ein Objekt ein Tier, ein Mensch oder ein nicht lebendes Objekt ist.

12. Robotischer Rasenmäher (100) umfassend einen Körper (140) und eine Vielzahl von Rädern (130) und mindestens einen Elektromotor (150), wobei mindestens einige der Räder (130) mit mindestens einem Elektromotor (150) antreibbar verbunden sind, wobei der robotische Rasenmäher (100) ferner eine Grasschneidevorrichtung (160) umfasst, die angepasst ist, um von einem Schneidmotor (165) angetrieben zu werden, und mindestens eine wiederaufladbare elektrische Energiequelle (155), um den Elektromotor (150) und/oder den Schneidmotor (165) mit Energie zu versorgen, wobei der robotische Rasenmäher (100) ferner eine Steuereinheit (110) nach einem der Ansprüche 1-8 umfasst.

13. Verfahren in einem robotischen Rasenmäher (100), wobei das Verfahren das Steuern des Betriebs des robotischen Rasenmähers (100) umfasst, einschließlich, aber nicht beschränkt auf das Steuern von mindestens einer Umgebungserfassungsvorrichtung (170, 171) und des Antriebs des robotischen Rasenmähers, unter Verwendung einer Hauptverarbeitungseinheit (115), und das
Empfangen (S100) von Daten von der mindestens einen Umgebungserfassungsvorrichtung (170, 171); **dadurch gekennzeichnet, dass** das Verfahren ferner die Verwendung einer separaten Hilfsverarbeitungseinheit (111) umfasst, die bestimmt ist zum:
Durchführen (S200) der Erkennung und Klassifizierung von Objekten (182); und
Treffen (S300) von Entscheidungen bezüglich der Steuerung der Geschwindigkeit und der Richtung des robotischen Rasenmähers (100) in Abhängigkeit von dem erkannten und klassifizierten Objekt (182) oder den Objekten.

14. Verfahren nach Anspruch 13, wobei das Verfahren das Trainieren (S90) eines neuronalen Netzes, das von der Hilfsverarbeitungseinheit (111) verwendet wird, im Voraus umfasst, wodurch der Erkennungs-, Klassifizierungs- und Entscheidungsprozess mittels künstlicher Intelligenz durchgeführt werden kann.

15. Verfahren nach Anspruch 14, wobei das Verfahren das kontinuierliche Trainieren (S400) des neuronalen Netzwerks umfasst, wenn der robotische Rasenmäher (100) in Betrieb ist.

16. Verfahren nach einem der Ansprüche 13 bis 15, wobei die Hilfsverarbeitungseinheit (111) ein Beschleuniger für künstliche Intelligenz, KI, ist.

## Revendications

1. Unité de commande de tondeuse à gazon robotisée (110) adaptée pour être utilisée dans une tondeuse à gazon robotisée (100) et comprenant une unité de traitement (115) principale adaptée pour amener l'unité de commande (110) à commander le fonctionnement de la tondeuse à gazon robotisée (100), comportant, mais sans s'y limiter, la commande d'au moins un dispositif de détection d'environnement (170, 171) et la propulsion de la tondeuse à gazon robotisée (100), **caractérisée en ce que** l'unité de commande (110) comprend en outre une unité de traitement auxiliaire (111) distincte qui est dédiée au fait d'effectuer la reconnaissance et la classification d'objets (182) au moyen de données acquises par au moins un dispositif de détection d'environnement (170, 171).

2. Unité de commande (110) selon la revendication 1, dans laquelle l'unité de traitement d'auxiliaire (111) comprend un réseau neuronal qui peut être formé à l'avance, ce qui permet de réaliser le processus de reconnaissance, de classification et de décision au moyen de l'intelligence artificielle, IA.

3. Unité de commande (110) selon la revendication 2, dans laquelle le réseau neuronal est adapté pour être entraîné en continu lorsque la tondeuse à gazon robotisée (100) est opérationnelle.

4. Unité de commande (110) selon l'une quelconque des revendications précédentes, dans laquelle l'unité de traitement auxiliaire (111) est un accélérateur d'intelligence artificielle, IA.

5. Unité de commande (110) selon l'une quelconque des revendications précédentes, dans laquelle l'unité de traitement auxiliaire (111) est adaptée pour recevoir des données directement d'au moins un dispositif de détection d'environnement (170, 171).

6. Unité de commande (110) selon l'une quelconque des revendications précédentes, dans laquelle au moins un dispositif de détection d'environnement (170, 171) est sous la forme :
- d'un dispositif émetteur-récepteur radar ;
- d'un dispositif Lidar ;
- d'un dispositif de détection à ultrasons ; ou
- d'un appareil photo.

7. Unité de commande (110) selon l'une quelconque des revendications précédentes, dans laquelle l'unité de traitement principale (115) est adaptée pour recevoir des données concernant la reconnaissance et la classification d'objets (182) de l'unité de traitement auxiliaire (111), et pour prendre des décisions concernant la commande de la vitesse et de la direction de la tondeuse à gazon robotisée (100) en fonction de l'objet (182) reconnu et classifié ou des objets reconnus et classifiés.

8. Unité de commande (110) selon l'une quelconque des revendications 1 à 6, dans laquelle l'unité de traitement auxiliaire (111) est adaptée pour prendre des décisions concernant la commande de la vitesse et de la direction de la tondeuse à gazon robotisée (100) en fonction de l'objet (182) ou des objets reconnus et classés, et pour fournir ces décisions à l'unité de traitement principale (115).

9. Unité de commande (110) selon l'une quelconque des revendications précédentes, dans laquelle l'unité de traitement auxiliaire (111) est adaptée pour effectuer au moins une partie principale de la classification des objets.

10. Unité de commande (110) selon la revendication 9, dans laquelle une partie de la classification des objets est effectuée par l'unité de traitement principale (115).

11. Unité de commande (110) selon l'une quelconque des revendications précédentes, dans laquelle la classification des objets (182) comprend le fait de déterminer si un objet est un animal, un être humain ou un objet non vivant.

12. Tondeuse à gazon robotisée (100) comprenant un corps (140), et une pluralité de roues (130) et au moins un moteur électrique (150), où au moins certaines des roues (130) sont reliées de manière à pouvoir être entraînées par au moins un moteur électrique (150), où le robot tondeuse (100) comprend en outre un dispositif de coupe de l'herbe (160) adapté pour être entraîné par un moteur de coupe (165) et au moins une source d'énergie électrique rechargeable (155) pour alimenter le moteur électrique (150) et/ou le moteur de coupe (165), dans laquelle le robot tondeuse (100) comprend en outre une unité de commande (110) selon l'une quelconque des revendications 1 à 8.

13. Procédé dans une tondeuse à gazon robotisée (100), dans lequel le procédé comprend
la commande du fonctionnement de la tondeuse à gazon robotisée (100) comportant, mais sans s'y limiter, la commande d'au moins un dispositif de détection d'environnement (170, 171) et la propulsion de la tondeuse à gazon robotisée, à l'aide d'une unité de traitement principale (115), et
la réception (S100) des données provenant d'au moins un dispositif de détection d'environnement (170, 171) ; **caractérisé en ce que** le procédé comprend en outre l'utilisation d'une unité de traitement auxiliaire séparée (111) dédiée à :
effectuer (S200) la reconnaissance et la classification des objets (182) ; et
prendre (S300) des décisions concernant la commande de la vitesse et de la direction de la tondeuse à gazon robotisée (100) en fonction de l'objet (182) ou des objets reconnus et classés.

14. Procédé selon la revendication 13, dans lequel le procédé comprend l'entraînement (S90) d'un réseau neuronal, utilisé par l'unité de traitement auxiliaire (111), à l'avance, ce qui permet d'effectuer le processus de reconnaissance, de classification et de décision au moyen de l'intelligence artificielle, IA.

15. Procédé selon la revendication 14, dans lequel le procédé comprend l'entraînement continu (S400) du réseau neuronal lorsque la tondeuse à gazon robotisée (100) est opérationnelle.

16. Procédé selon l'une quelconque des revendications 13 à 15, dans lequel l'unité de traitement auxiliaire (111) est un accélérateur d'intelligence artificielle, IA.
